# EUROPEAN PATENT APPLICATION

(11) **EP 1 033 654 A1**
(43) Date of publication of application: **06.09.2000**
(21) Application number: 99103883.7
(22) Date of filing: 01.03.1999
(51) Int. Cl.: G06F 9/46, G06F 5/06

(54) **Buffered communication between entities operating at different data rates**

(71) Applicant: Sony International (Europe) GmbH, 10785 Berlin (DE)
(72) Inventor: Spalink, Gerd c/o Sony International (Europe) GmbH, 70736 Fellbach (DE)
(74) Representative: MÜLLER & HOFFMANN Patentanwälte

(57) **Abstract**

Method for two entities (D1,D2), operating at different clock rates, to communicate via a buffer (B2). The buffer (B2) comprises an enable signal (S4) that constructs the output signal (S5) from the input signal (S3) by determining which values of the input signal (S3) are to be discarded and which values are to be taken into account. Exclusive access to the buffer (B2) is controlled by a semaphore mechanism. Full and empty signals control the reading from and the writing to the buffer (B2).

## Description

The present invention relates to a method to create a dynamic data flow design in a multiprocessor, multitask or multithread system working with static or scalable static data flow signals. In particular, the present invention relates to integrated development environments that enable the developer to design functional modules of electric circuits on a high abstraction level and to continually verify the functionality of these modules when coming to lower abstraction levels.

To construct such an integrated development environment, e.g. the COSSAP tool set available from SYNOPSYS can be used as a simulation basis. This tool has to be complemented by other tools and by hardware to obtain verification during the whole design process. The other tools are for example chip synthesis and chip layout tools for hardware implementations or signal processor compilers for software implementations. The hardware consists for example of signal generators to stimulate the target system, data loggers to verify the output of the target system and the target system itself or an emulator of the target system.

The simulation basis is a complete digital signal processing (DSP) design tool suite that is used by designers of DSP systems to create, explore and test algorithms, architectures and implementations for a variety of DSP applications. The COSSAP simulation basis is based on block diagrams. Signals are used to connect blocks to construct a block diagram. Those blocks can either be primitive blocks from a library or hierarchical blocks created with the help of other block diagrams. The use of hierarchical blocks enables the developer to choose the level of abstraction according to his needs. Therefore, such a design environment is a hardware oriented circuit simulation basis with which the single hardware blocks that are going to be integrated in a chip can easily be tested in their operation and interconnection with other blocks before the production of the chip actually starts. Therefore, such a simulation basis directly reflects the hardware and is directly comparable to the hardware solution.

As mentioned above, the simulation basis uses block diagrams to describe a digital processing system. In the diagrams the digital signal processing operations are represented by blocks and the flow of data elements between the blocks is represented by arrows. Modern simulators are based on a full dynamic data flow approach. This means that blocks are activated as soon as all data elements required to perform the signal processing operation are available at their input ports. On the other hand, the chip synthesis and chip layout tools for hardware implementations and the signal processor compilers for software implementations can only handle scalable static data flow blocks. Therefore, the advantages of the dynamic data flow approach cannot be set into the hardware or software implementation and very efficient code or hardware layouts can only be generated if the data flow parameters are known, i.e. the number of input elements versus the number of output elements for every block.

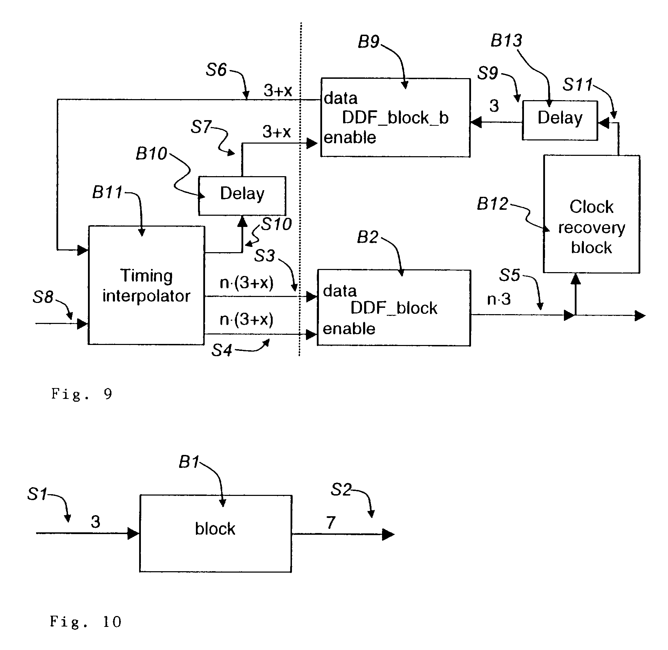

A scalable static data flow block B1 with such fixed data flow parameters is shown in Fig. 10a. This block B1 receives an input signal S1 comprising three input elements and always generates an output signal S2 comprising seven output elements. In case of code generation for a software implementation the signal values will be stored in fixed size buffers allocated at compile time or in the initialization phase and the buffer management can e.g. be done by pointer operations. This type of code can be generated efficiently e.g. with the COSSAP DSP code generator.

As mentioned above, a serious drawback is that code for dynamic data flow blocks cannot be created with this method. Therefore, it is the object underlying the present invention to improve the design flow from a high level simulation towards an implementation running as software in a signal processor target or for a hardware implementation so that also dynamic data flow blocks can be handled in such a multiprocessor, multitask or multithread system.

The inventive method to create a dynamic data flow design in such a multiprocessor, multitask or multithread system working with static or scalable static data signals is characterized in independent claim 1. Preferred embodiments thereof are defined in dependent claims 2 to 16.

According to the present invention the dynamic data flow design is realized by creating different domains each consisting of an arbitrary number of blocks with scalable static data flow, assigning each of these domains to a different processor, task or thread and connecting these domains, i.e. these processors, tasks or threads with an inter processing unit that adapts different data rates of the individual processors, tasks or threads. In this way dynamic data flow is created with the help of different data rates of connected processors, tasks or threads.

The present invention will be better understood from the following detailed description of exemplary embodiments thereof taken in conjunction with the accompanying drawings, wherein:
- **Fig. 1**: shows the coupling of two static data flow domains with a dynamic data flow block according to a first embodiment of the present invention;
- **Fig. 2**: shows a dynamic data flow block diagram including said dynamic data flow block according to the first embodiment of the present invention in view of a multi DSP simulator;
- **Fig. 3**: shows the dynamic data flow block diagram shown in Fig. 2 in as it would be seen by a multi DSP code generator;
- **Fig. 4**: shows a further dynamic data flow block according to a second embodiment of the present invention;
- **Fig. 5**: shows an example of task scheduling with the help of semaphores;
- **Fig. 6**: shows a flow diagram of the read and write operations needed to connect two domains in case of the dynamic data flow block according to the first embodiment of the present invention;
- **Fig. 7**: shows a flow diagram for the read and write operations needed to connect two domains in case of the further dynamic data flow block shown in Fig. 4 according to the second embodiment of the present invention;
- **Fig. 8**: shows a flow diagram for the read and write operations needed to connect two domains according to a further embodiment of the present invention;
- **Fig. 9**: shows an implementation example for fully digital recovery in a dynamic data flow design according to the present invention; and
- **Fig. 10**: shows a scalable static data flow block.

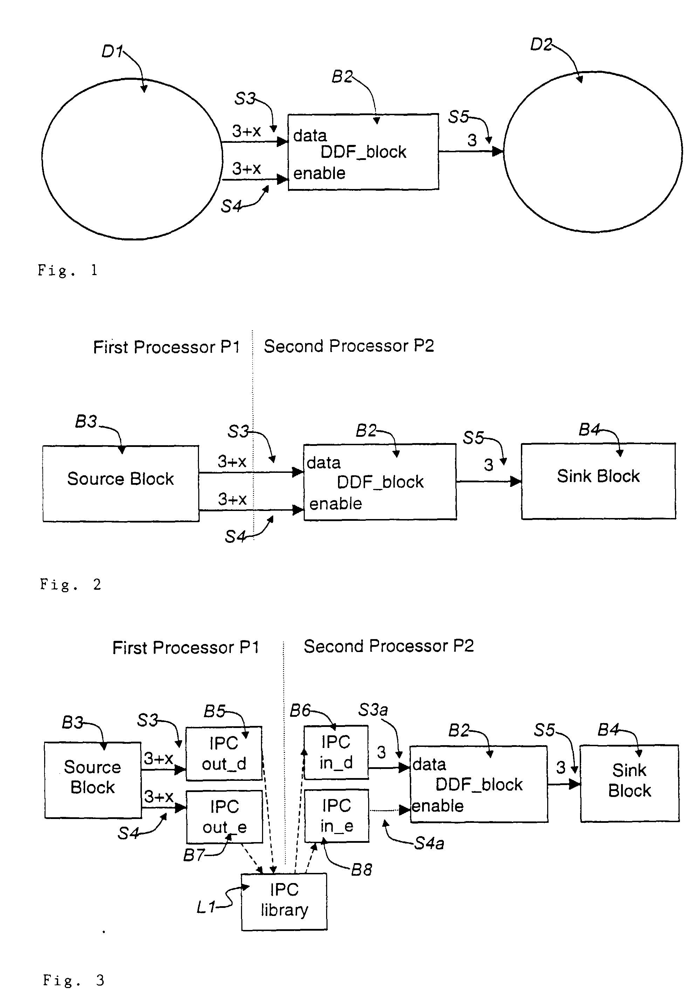

Fig. 1 shows as a first example the coupling of two static data flow domains D1 and D2 with a dynamic data flow block B2 according to a first embodiment of the present invention. Each of these domains consists of an arbitrary number of blocks with scalable static data flow only. According to the present invention these domains are connected with a dynamic data flow block B2 so that each processor, task or thread representing one of the domains D1 and D2 can run efficient static scalable data flow code, while the whole design is allowed to be of the dynamic data flow type.

The behaviour of the dynamic data flow block B2 that has one data input port receiving a signal S3 from the first domain D1, one enable input port that receives a signal S4 from the first domain D1 and one output port that outputs a signal S5 to the second domain D2 is defined as follows with the precondition that the signals S3 and S4 have the same data rate: The dynamic data flow block B2 checks if the value of the element at the enable input port is zero. If it is, the corresponding element at the data input port is discarded. On the other hand, if the value of the element at the enable input port is not zero, the corresponding element at the data input port is propagated to the output of the block B2 to generate the output signal S5.

Therefore, the number of elements needed at the input port to generate a given number of values at the output port depends on the values of the elements arriving at the enable port.

Of course, it is also possible that not the value zero leads to discard the corresponding element, but another predetermined value, and it is also possible to check for a predetermined value of the element at the enable input port to propagate the corresponding element at the data input port to the output of the block B2 and to discard the corresponding element at the data input port in case the corresponding element at the enable input port has not the predetermined value.

In the example shown in Fig. 1 the signal S5 output from the dynamic data flow block B2 contains three elements within a given time. The data input signal S3 contains 3+x elements within this given time and, since the data input signal S3 and the enable input signal S4 have the same data rates, the enable input signal S4 also contains 3+x elements within this given time. Therefore, dynamic data flow is realized according to this first preferred embodiment of the present invention by assigning the output signal S5 of the dynamic data flow block B2 to a second domain B2 that receives a fixed amount of elements within a given time, e.g. 3 elements, and to assign the input signals S3 and S4 of the dynamic data flow block B2 that contain an arbitrary number of elements that is higher than the numbers of elements at the output port within said given time, e.g. 3+x, to a first domain D1. The number x is arbitrary and needs not to be fixed. This design can also be specified in that a first processor, task or thread representing the first domain D1 has a first data rate to output the input signals S3 and S4 to the dynamic data flow block B2 and a second processor, task or thread representing the second domain D2 as a second data rate equal to or lower than the first data rate receives the output signal of the dynamic data flow block D2 with this second data rate.

The following Table 1 shows an example of the values the signal elements might have with x = 2, i.e. five elements going it,to the dynamic data flow block B2 and three elements being output by the dynamic data flow block B2 within a given period of time.

**Table 1:**

| Example for the values of the elements with dynamic data flow | | | | | |
|---|---|---|---|---|---|
| Data element (Signal S3) | 5 | 18 | -5 | 2 | 7 |
| Enable element (Signal S4) | 1 | 0 | 1 | 1 | 0 |
| Output element (Signal S5) | 5 | None | -5 | 2 | None |

As stated above, modern simulators, such as the COSSAP simulator, are capable of simulating dynamic data flow in a direct way without assigning the input and output signals of a dynamic data flow type block to different processors, tasks or threads. According to the present invention, on the other hand, the input and output signals of a dynamic data flow block are assigned to different domains so that very efficient code or hardware can be automatically generated based on the block diagram used for simulation with available chip synthesis and chip layout tools or code generators.

Fig. 2 shows a dynamic data flow block diagram according to the present invention that can be used for the COSSAP simulator wherefrom very efficient code or hardware can be generated. Fig. 2 shows the same dynamic data flow block B2 that is also shown in Fig. 1. The data input signal S3 and the enable input signal S4 to the dynamic data flow block B2 are generated by a source block B3 that represents the first domain D1 and the output signal S5 of the dynamic data flow block B2 is fed to a sink block B4 that represents the second domain D2. Since it is not possible for the COSSAP simulator to divide a block and to assign parts of the block to different processors, tasks or threads, only the source block B3 is assigned to a first processor P1 and the dynamic data flow block B2 as well as the sink block B4 is assigned to a second processor P2. For each of these processors P1 and P2 a multi-DSP code generator can generate two separate pieces of static data flow code or the chip synthesis and chip layout tools can generate a separate hardware implementation. Furtheron, the signals S3 and S4 that are coming from the source block B3 have to cross a "border" to pass from the region of the first processor P1 to the region of the second processor P2 so that all in all a dynamic data flow design is created.

This passing across the border in-between both processors P1 and P2 is performed via an inter processing unit that adapts the different data rates of both processors and therefore performs the function of the dynamic data flow block B2 as it is described above.

An exemplary view of the dynamic data flow block diagram shown in figure 2 from a multi-DSP code generator is shown in Fig. 3. Fig. 3 only includes the dynamic data flow block B2 as a "dummy block" that passes on all elements received at its data input to its output and discards all elements received at its enable input, the whole functionality of the dynamic data flow block B2 is performed within the blocks B5 to B8 and L1. The dynamic data flow block B2 is only shown in Fig. 3, because the simulating tools need a proper definition of all input and output signals to a block and of all signals passing a processor boundary.

Fig. 3 shows that the signal S3 created by the source block B3 is fed to an IPC (Inter Processor Communication) out block B5 and the signal S4 also generated by the source block B3 is fed to an IPC out block B7. The IPC out block B5 and the IPC out block B7 are both assigned to the first processor P1. On the other hand, an IPC in block B6 generates a signal S3a and an IPC in block B8 generates a signal S4a. The IPC in block B6 and the IPC in block B8 are both assigned to the second processor P2. From a formal point of view the signal S3a generated by the IPC in block B6 corresponds to the signal S3 received by the IPC out block B5 and the signal S4a generated by the IPC in block B8 corresponds to the signal S4 received by the IPC out block B7. These signals cross the processor boundary via an IPC library L1. The signals S3a and S4a are respectively used as data input signal and enable input signal of the dynamic data flow block B2 that generates the output signal S5 to be received by the sink block B4. As mentioned above, from the practical point of view the dynamic data flow block B2 is no longer of the dynamic data flow type (as the simulator itself sees it), but copies all data elements to its output and ignores its enable input. In this way it is indeed a static data flow block and the code generator or the chip synthesis and chip layout tools can insert it into the code or the hardware without any special treatment. The dynamic data flow capability has been moved to the IPC library L1 and all blocks B5 to B8 that call this library are inserted automatically by the multi-DSP code generator or the chip synthesis or chip layout tools where signals cross processor boundaries. These IPC blocks B5 to B8 look like a normal signal sink or source, i.e. the IPC out blocks B5 and B7 are signal sinks and the IPC in blocks B6 and B8 are signal sources. This is done through an IPC driver mechanism and controlled by the architecture file and attributes assigned to the signals in a standard way.

According to the present invention the inter processor communiation library L1 provides the functionality to receive enable and data signals from the IPC out blocks one by one, to store every signal in a separate buffer, to associate the data and enable pairs correctly and to retrieve the data and (depending on the enable value) remove dummy values or insert stuffing values so that one of the corresponding IPC in blocks generates an appropriate output signal and the other IPC in block generates an output signal to be discarded.

This IPC library adapts the different data rates of the first processor P1 and the second processor P2 or equivalently of a first task or thread and a second task or thread. The IPC library can either be accessed by the first static data flow domain D1, i.e. the first processor P1, a first task or a first thread, or the second static data flow domain D2, i.e. the second processor P2, a second task or a second thread. The access control is preferably realized with a semaphore technology to interface the operating systems. Basically, a semaphore is a counter controlling access to a resource. If a processor, task or thread requests a semaphore, there are two possible results: Either the counter is not zero, then it is decremented and the thread can continue immediately or the thread is blocked until another thread releases this semaphore.

The inter processor communication library L1 furtheron provides the following functionality in a multi-threading operating system: To provide a block sending thread command when a buffer in the inter processor communication library L1 is full and to provide a block receiving thread command when a buffer of the inter processor communication library L1 is empty.

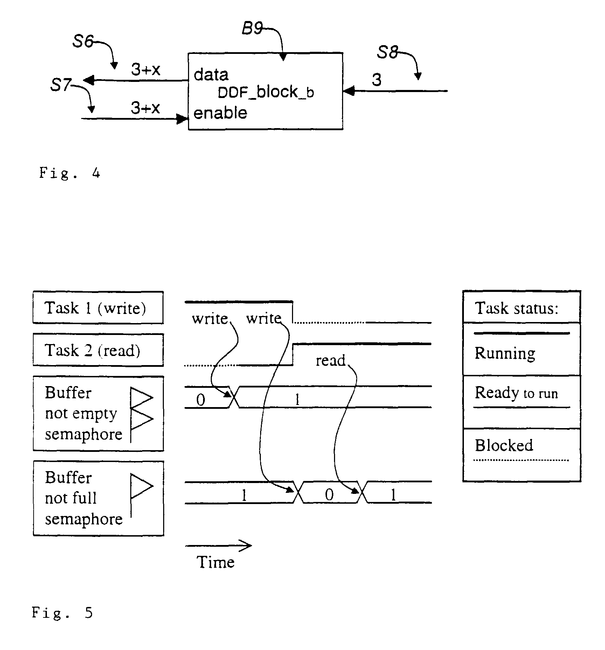

Fig. 4 shows another dynamic data flow block B9 according to a second preferred embodiment of the present invention. In contrast to the dynamic data flow block B2 described above that dynamically removes values, the second dynamic data flow block B9 dynamically inserts values. Therefore, the second dynamic data flow block B9 comprises a data output outputting a data signal S6 and an enable input receiving an enable signal S7, both having the same data rate, and an input receiving a data signal S8 having the same or a lower data rate. The behaviour of the second dynamic data flow block B9 is as follows: If the value of an element of the enable signal S7 received at the enable input is zero, a dummy element is sent to the data output to become an element of the data signal S6. If the value of the element of the enable signal S7 received at the enable input is not zero, the next element of the data input signal S8 is propagated to the data output as an element of the data output signal S6.

Of course, also in this case the elements of the enable signal S7 can be checked for other predetermined values or the functionality of the checking procedure can be inverted, i.e. the next element of the data input signal S8 can be propagated to the data output as element of the data output signal S6 if the element of the enable input signal S7 has a predetermined value and a dummy element can be sent to the data output if the value of the corresponding element of the enable input signal S7 has not said predetermined value.

Table 2 shows an example of possible values the elements might assume. In this case the value of -1 for the dummy elements has been arbitrarily chosen and is of no significance for the functionality. These elements are only needed to fulfil static data flow requirements.

**Table 2:**

| Example for the values of the elements with dynamic data flow | | | | | |
|---|---|---|---|---|---|
| Data element (Signal S6) | 5 | None | -5 | 2 | None |
| Enable element (Signal S7) | 1 | 0 | 1 | 1 | 0 |
| Output element (Signal S8) | 5 | -1 (dummy) | -5 | 2 | -1 (dummy) |

For a better understanding of the following detailed description of the tasks within the inter processor communication library an example of the task scheduling controlled by semaphores on a single processor system where only one task can run at a time is explained in connection with Fig. 5. Fig. 5 shows the possible task status on the right-hand side. A task can either be running which is indicated by a solid line showing a high level, ready to run which is indicated by a solid line having a low level or be blocked which is indicated by a dotted line having a low level.

The left-hand side of Fig. 5 shows the status of two different tasks, namely task 1 that writes into a buffer and task 2 that reads from a buffer and the values of two semaphores that are corresponding to the buffer, namely a buffer not emty semaphore and a buffer not full semaphore. In an initial stage shown in Fig. 5 task 1 has the running status, task 2 has the blocked status, the buffer not empty semaphore has a value zero and the buffer not full semaphore has a value 1. As long as the buffer not empty semaphore has the value zero task 2 will be blocked and as long the buffer not full semaphore has the value 1 task 1 can run. After something has been written into the buffer by task 1 the buffer not empty semaphore will be set and changes its value to 1. Therefore, task 2 is not blocked anymore and comes into the ready-to-run status, since task 1 is running it continues writing into the buffer until the buffer not full semaphore is taken and changes its value to zero to indicate that the buffer is full. In this case task 1 will be blocked, since no more elements can be written into the buffer. Therefore, task 2 can change its status from ready-to-run to running and elements will be read from the buffer, whereafter the buffer not full semaphore will be set again to have a value 1, since the buffer is not full anymore. Following therefrom, task 1 can change its status from blocked to ready-to-run.

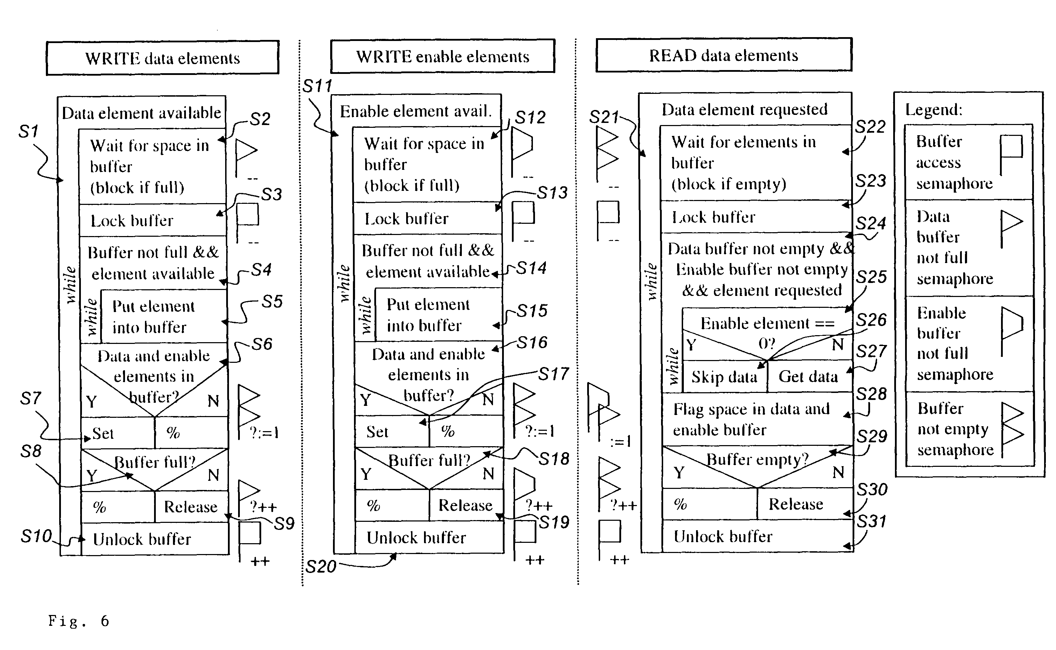

As is apparent from the above description there can be several types of IPC libraries L1 to realize the different types of dynamic data flow blocks B2 and B9 or also a block just assuring a static data flow from the first domain D1, i.e. the first processor P1, the first task or the first thread, to the second domain D2, i.e. the second processor P2, the second task or the second thread. In the following the functionality of those three types of IPC libraries are explained in connection with Figs. 6 to 8 that respectively show flow diagrams for the read and write operations within the respective IPC library.

The DSP code generator or the chip synthesis and chip layout tool generates read and write function calls to the respective IPC library that passes the number of elements to the respective read or write function and an identifier for the signal number as parameter. Different function names are used for the three types of IPC libraries indicated above. It is guaranteed that in case of static data flow a read block is called the same number of times as a write block and in case of static or dynamic data flow read/write calls of the same signal always have the same number of elements.

Fig. 6 shows the flow diagrams for writing data and enable elements and reading data elements when the enable signal has the same direction as the data signal, i.e. for the IPC library L1, as it is shown in Fig. 3, that is used to implement the dynamic data flow block B2 as it is shown in Figs. 1 and 2. Fig. 6 shows on the left-hand side the flow chart that is showing the method to write data elements into the data buffer, in the middle left the flow chart that defines the method to write enable elements into the enable buffer, in the middle right the flow chart that defines the method to read data elements from the data buffer and on the right-hand side a legend that shows the symbols for the different semaphores that are needed to control the buffer access.

The write and read functions are respectively called from the different domains, i.e. the different processors, tasks or threads which operate independently from another. Therefore, in case one domain is manipulating a buffer all other domains must be blocked. This is achieved with the buffer access semaphore that is valid for the data buffer and the enable buffer to indicate that either the domain that is writing elements or the domain that is reading elements can access both buffers at that time.

Furtheron, one data buffer not full semaphore indicates when the data buffer is full to block the domain that is writing data elements into the data buffer, an enable buffer not full semaphore shows when the enable buffer is full to block the domain writing enable elements into the enable buffer and one buffer not empty semaphore shows whether both buffers are not empty to block the reading domain when the buffer is empty.

To write data elements into the data buffer it is checked in a first step S1 whether a data element is available. If a data element is available it will be waited for space in the data buffer in step S2 by requesting the data buffer not full semaphore. If the data buffer is full, i.e. if the data buffer not full semaphore is not received, the process that wants to write data elements into the data buffer gets blocked until said semaphore is received. After reception of the data buffer not full semaphore the data buffer and the enable buffer get locked by requesting the buffer access semaphore in step S3 so that both buffers can only be modified by the routine to write data elements. After the reception of the buffer access semaphore it is checked in step S4 whether the data buffer is not full and a data element is available. While this is the case the data element is put into the data buffer in step S5. If either the data buffer is full or no further data element is available in step S4 it is checked in step S6 whether data elements and enable elements are in the respective buffers. If both buffers contain elements the buffer not empty semaphore gets set in step S7. If either the data buffer or the enable buffer contains no elements in step S6 or the buffer not empty semaphore has been set in step S7 it is checked in step S8 whether the data buffer is full or not. If the data buffer is not full then the data buffer not full semaphore will be released in step S9. After the data buffer is full in step S8 or after the data buffer not full semaphore has been released in step S9 both buffers, i.e. the data buffer and the enable buffer, get unlocked in step S10 by releasing the buffer access semaphore. Thereafter, the operation continues with step S1 and proceeds again with steps S2 to S10 until the corresponding domain stops delivering data elements.

To write enable elements into the enable buffer it is checked in a first step S11 whether an enable element is available. If an enable element is available it will be waited for space in the enable buffer in step S12 by requesting the enable buffer not full semaphore. If the enable buffer is full, i.e. if the enable buffer not full semaphore is not received, the process that wants to write enable elements into the enable buffer gets blocked until said semaphore is received. After reception of the enable buffer not full semaphore the data buffer and the enable buffer get locked by requesting the buffer access semaphore in step S13 so that both buffers can only be modified by the routine to write enable elements. After the reception of the buffer access semaphore it is checked in step S14 whether the enable buffer is not full and an enable element is available. While this is the case the enable element is put into the enable buffer in step S15. If either the enable buffer is full or no further enable element is available in step S14 it is checked in step S16 whether data elements and enable elements are in the respective buffers. If both buffers contain elements the buffer not empty semaphore gets set in step S17. If either the data buffer or the enable buffer contains no elements in step S16 or the buffer not empty semaphore has been set in step S17 it is checked in step S18 whether the enable buffer is full or not. If the enable buffer is not full then the enable buffer not full semaphore will be released in step S19. After the enable buffer is full in step S18 or after the enable buffer not full semaphore has been released in step S19 both buffers, i.e. the data buffer and the enable buffer, get unlocked in step S20 by releasing the buffer access semaphore. Thereafter, the operation continues with step S11 and proceeds again with steps S12 to S20 until the corresponding domain stops delivering data elements.

To read data elements from the data buffer it is checked in step S21 whether a data element is requested by the reading domain. If a data element is requested in step S21 the next step S22 is carried out in which the IPC library blocks the reading of an element from the data buffer as long as no elements are in said buffer by requesting a buffer not empty semaphore and waiting till the buffer not empty semaphore is received. After the buffer not empty semaphore is received the data buffer and the enable buffer are locked by requesting a buffer access semaphore in step S23. In the following step S24 it is checked whether the data buffer is not empty and the enable buffer is not empty and a data element is requested. If this is the case it is checked in step S25 whether the next enable element equals to zero or not. If the enable element equals to zero in step S25 the next data element is skipped in step S26 and if the enable element does not equal to zero in step S25 the next data element is put out in step S27. After either step S26 or step S27 is carried out the operation again returns to step S24 until the data buffer is empty or the enable buffer is empty or no data element is requested in step S24. In this case it is flagged that space is in the data buffer and in the enable buffer by setting the data buffer not full semaphore and the enable buffer not full semaphore in step S28. Thereafter, it is checked in step S29 whether the data buffer is empty or not. In case the data buffer is not empty the buffer not empty semaphore gets released in step S30. After the data buffer is empty or the buffer not empty semaphore got released in step S30 both buffers get unlocked in step S31 before the operation again proceeds with step S21 until no data element is requested anymore.

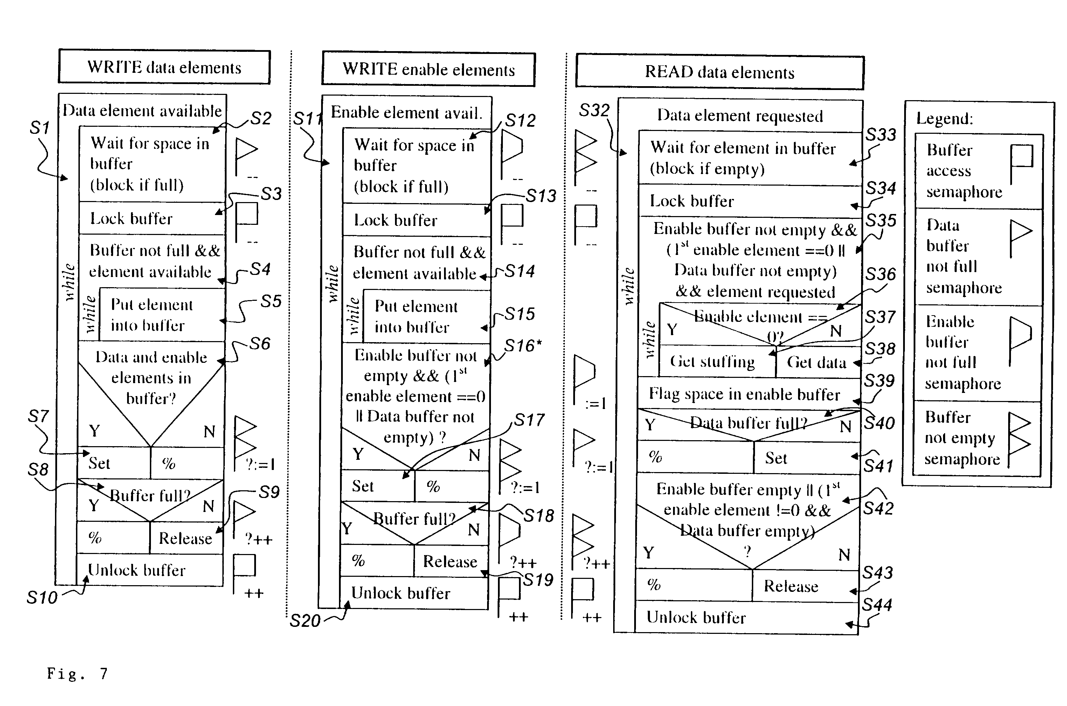

The methods to write data elements into the data buffer, to write enable elements into the enable buffer and to read data elements from the data buffer shown in Fig. 7 implement the dynamic data flow block B9 shown in Fig. 4 into an IPC library.

Fig. 7 shows similar to fig. 6 on the left-hand side the flow chart that is showing the method to write data elements into the data buffer, in the middle left the flow chart that defines the method to write enable elements into the enable buffer, in the middle right the flow chart that defines the method to read data elements from the data buffer and on the right-hand side a legend that shows the symbols for the different semaphores that are needed to control the buffer access.

The blocking of domains is achieved with semaphores as in the embodiment described in connection with figure 6.

The routine to write data elements into the data buffer is identical to that described in connection with figure 6, therefore, the description thereof is omittered here.

The routine to write enable elements into the enable buffer is similar to that described in connection with figure 6, therefore, the description of the identrical parts is omittered here and only the differences will be described. According to this embodiment a step S16* is carried out instead of step S16 as described in connection with the embodiment shown in figure 6. Therefore, in this embodiment, if either the enable buffer is full or no further enable element is available in step S14 it is checked in step S16* if enable elements are in the enable buffer, and whether the first enable element equals to zero or the data buffer is not empty. If this condition is true, the buffer not empty semaphore gets set in step S17. Otherwise or after the buffer not empty semaphore has been set in step S17 it is checked in step S18 whether the enable buffer is full or not. Then the routine is set forth as described in connection with figure 6.

To read data elements from the data buffer it is checked in step S32 whether a data element is requested by the reading domain. If a data element is requested in step S32 the next step S33 is carried out in which the IPC library blocks the reading of an element from the data buffer as long as no elements are in said buffer by requesting a buffer not empty semaphore and waiting till the buffer not empty semaphore is received. After the buffer not empty semaphore is received the data buffer and the enable buffer are locked by requesting a buffer access semaphore in step S34. In the following step S35 it is checked whether the the enable buffer is not empty, and the first enable element equals to zero or the data buffer is not empty, and a data element is requested. If this is the case it is checked in step S36 whether the next enable element equals to zero or not. If the enable element equals to zero in step S36 a stuffing value is output to the domain requesting a data element in step S26 and if the enable element does not equal to zero in step S36 the next data element is output to the domain requesting a data element in step S38. After either step S37 or step S38 is carried out the operation again returns to step S35 until the condition checked there is not true anymore. In this case it is flagged that space is in the enable buffer by setting the enable buffer not full semaphore in step S39. Thereafter, it is checked in step S40 whether the data buffer is full or not. In case the data buffer is not full the data buffer not full semaphore gets set in step S41. After the data buffer is not full or the data buffer not full semaphore got set in step S41 it is checked in step S42 whether the enable buffer is empty, or if the first enable element does not equal to zero and the data buffer is empty. If this condition is not true, the buffer not empty semaphore gets released in step S43. Therefore, the buffer not empty semaphore can only be released if a new read operation is possible. After the above condition is true or the buffer not empty semaphore got released in step S43 both buffers get unlocked in step S44 before the operation again proceeds with step S32 until no data element is requested anymore.

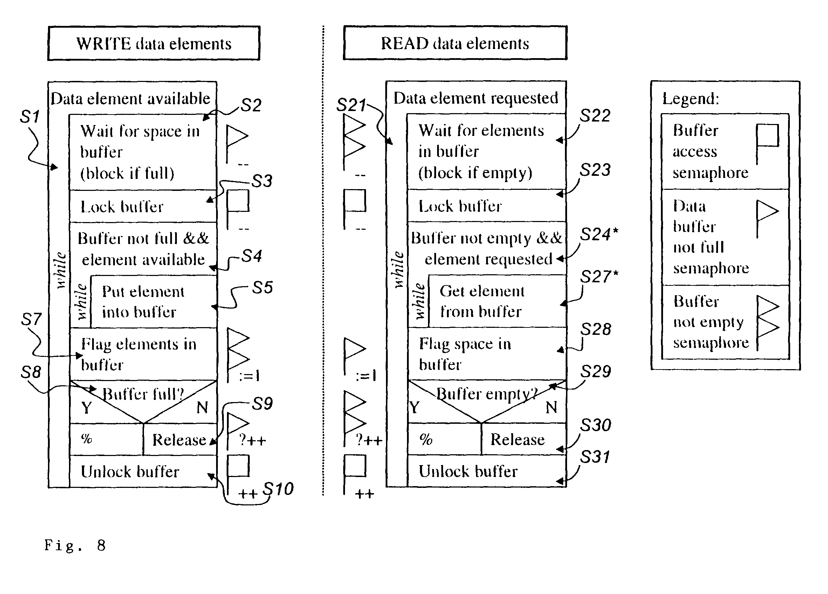

The functionality of an IPC library that adjusts partitions of a block diagram into separate domains that are potentially allowing parallel processing of the data and therewith a higher processing speed is shown in Fig. 8. This IPC library is used in case no enable signal at all is present.

Fig. 8 shows similar on the left-hand side the flow chart that is showing the method to write data elements into the data buffer, in the middle the flow chart that defines the method to read data elements from the data buffer and on the right-hand side a legend that shows the symbols for the different semaphores that are needed to control the buffer access.

The blocking of domains is achieved with semaphores as in the embodiment described in connection with figure 6, but no enable buffer not full semaphore is needed and therefore, the buffer access semaphore and the buffer not empty semaphore are only set and released in view of the data buffer.

The routine to write data elements into the data buffer is similar to that described in connection with figures 6 and 7, therefore, the description of the identical parts thereof is omittered here. Apart from the differences in view of the semaphores described above, the only difference is that step S6 is omitted and step S7 is directly and every time carried out after either the data buffer is full or no further data element is available in step S4.

The routine to read data elements from the data buffer is similar to that described in connection with figure 6, therefore, the description of the identical parts thereof is omittered here. Apart from the differences in view of the semaphores described above, the difference is that steps S24* and S27* are carried out instead of steps S24 and S 27 and steps S25 and S26 are omitted. In step S34* it is only checked whether the the enable buffer is not empty and a data element is requested. If this is the case always the next data element is output to the domain requesting a data element in step S27*. Thereafter the operation again returns to step S24* until the condition checked there is not true anymore. In this case the opertation is set forth as described in connection with figure 6 with step S28 in which it is flagged that space is in the enable buffer by setting the enable buffer not full semaphore and the following steps.

As can be seen from the above description the whole idea of adapting the different data rates of the different domains works, because all routines shown in figures 6 to 8 that get either implemented in hardware or in software run in an infinite loop in which all blocks that are e.g. shown in figure 3 and that respectively carry out one of the routines shown in figures 6 to 8 are activated/called sequentially one after the other.

Generally, in case of the write routines the outer while loop S1, S11 checking whether respective elements are available terminates when all elements passed to the library could be written in the buffer associated to the respective signal. As mentioned above, after the buffer not full semaphore for the respective buffer has been acquired, the respective buffer is locked to prevent other domains, i.e. processors, tasks or threads, from modifying the buffer pointers or contents. In the inner while loop S4, S14 checking whether the respective buffer is not full and the respective elements are available the respective elements are put into the respective buffer until either the respective buffer is full or all elements have been written. After the writing it gets flagged that elements are in the buffer and the buffer gets unlocked.

Furtheron, in case of the read routines the outer while loop S21, S32 checking whether data elements are requested secure that a domain receives the requested number of elements also when the process got blocked, since temporarily not enough elements have been available in both buffers. In the inner while loop S24, S35, S24* the respective data elements or stuffing values are output or not to the domain requesting them until the condition of the respective loop is not met anymore. After the reading it gets flagged that space is in the buffer and the buffer gets unlocked.

Fig. 9 shows an application example in which the dynamic data flow design according to the present invention is used to perform a variable rate clock recovery. A variable rate clock recovery is required when a signal is generated and transmitted with a certain clock frequency, but this frequency is not precisely available at the receiving side.

To implement a fully digital clock recovery, according to the present invention the block diagram shown in Fig. 9 can be used. The shown design is a phase locked loop (PLL) for clock recovery of digitally modulated signals. An external voltage controlled oscillator (VCO) is not necessary, since the functionality is covered fully digital by the timing interpolator block B11.

This timing interpolator block B11 receives the input signal S8 that represents the samples derived from an A/D converter at a sample rate determined by a free running crystal oscillator. As mentioned above this sampling rate has not to be the precise sampling rate of the sending side and is therefore chosen to be higher than the sampling rate of the sending side. The timing interpolator B11 knows the approximate ratio in-between the sampling rate of the A/D converter and the clock frequency of the signal generated within the sending side. On the basis of this ratio the timing interpolator interpolates the sampling instants to calculate a signal S3 consisting of interpolated samples and of dummy values inserted to satisfy the static data flow constraints. The timing interpolator also generates an enable signal S4 that indicates which of the elements of the signal S3 are interpolated samples and which are dummy values. Both signals S3 and S4 that respectively comprise n·(3+x) elements in this example are fed to a dynamic data flow block B2, signal S3 as data input signal and signal S4 as enable signal. The dynamic data flow block B2 outputs a signal S5 that comprises n·3 elements in this example and represents the signal sampled at the rate that has been used when the signal was transmitted. This signal is generated as it is described in connection with Figs. 2 and 6.

Since the timing interpolator does not precisely know the ratio in-between the sampling rate of the A/D converter and the clock frequency of the signal generated at the transmitter side it is controlled through a feedback loop by a signal that is calculated by a clock recovery block B12 that receives the output signal S5 and consists of a phase error detector, an integrator and a loop filter to determine if the sampling is too early or too late and to feed the accumulated phase error to the timing interpolator so that the phase error can be nullified. The output signal S11 of the clock recovery block B12 is fed to a delay block B13 that feeds its output signal S9 to a dynamic data flow block B12 that is working according to Figs. 4 and 7. The enable signal S7 for the dynamic data flow block B9 is an output signal S10 of the timing interpolator B11 that got delayed by a delay block B10. The output signal S10 corresponds to the output signal S4 if the phase locked loop works with the same high rate as the data flow, i.e.the variable n of the signals S3 and S4 that carry n·(3+x) elements per time frame equals to 1. Otherwise the output signal S10 correspond only to every n^{th} element of the output signal S4.

The output signal S6 of the dynamic data flow block B9 is input into the timing interpolator B11 as control signal to nullify the phase error.

The delay blocks B10 and B13 are necessary to start the data flow. Basically, the loop starts with respective data elements of suitable values that get emitted from the delay blocks, e.g. a "1" from the delay block B10 and a "0" from the delay block B13. After the initialization the respective delay block only copies elements from the input to the output. The timing interpolator B11 ensures that the stuffing values in the signal S6 are in the correct places by generating the signal S10. Depending on the implementation and processing speed it is required to delay the signal S10 by a predetermined amount of samples to generate the signal S7 that is fed into the dynamic data flow block B9.

Therefore, the variable rate clock recovery circuit shown in Fig. 9 has two domains working with different clock rates, i.e. the timing interpolator B11 and the delay block B10 working with the clock frequency or data rate of the A/D converter and the clock recovery of B12 and the delay block B13 working with the clock frequency the transmitted signal was generated with. Both domains, i.e. processors, tasks or threads, are connected via dynamic data flow blocks B2 and B9 to realize a phase locked loop to nullify the phase error of the clock recovery.

Of course, the present invention can also be applied to other applications that need dynamic data flow to efficiently create code or hardware.

## Claims

1. Method to create a dynamic data flow design in a multiprocessor, multitask or multithread system working with static or scalable static data flow subdesign, **characterized by** assigning a first static or scalable static data flow signal comprising data elements and having a first data rate to a first processor, task or thread, a second static or scalable static data flow signal comprising data elements and having a second data rate equal to or lower than the first data rate to a second processor, task or thread and linking said first and second processors, tasks or threads via an inter processing unit that adapts the first and second data rates.

2. Method according to claim 1, **characterized in that** either said first processor, task or thread or said second processor, task or thread can access said inter processing unit at a time.

3. Method according to claim 1 or 2, **characterized in that** said access control of said inter processing unit is realized with a semaphore technology.

4. Method according to anyone of claims 1 to 3, **characterized in that**
a third static or scalable static data flow signal having said first data rate is assigned to said first processor, task or thread, said third static or scalable static data flow signal being an enable signal comprising enable elements and defining the data elements of said first fixed or scalable data signal that should build said second static or scalable static data flow signal, and
said inter processing unit receives said first static or scalable static data flow signal and said third static or scalable static data flow signal from said first processor, task or thread and enables said second processor, task or thread to receive said second static or scalable static data flow signal.

5. Method according to claim 4, **characterized by** the following steps within said inter processing unit:
storing all data elements of said said first static or scalable static data flow signal into a first buffer,
storing all enable elements of said third static or scalable static data flow signal that are respectively containing a predefined enable value for a respective data element of said first static or scalable static data flow signal building a data element of said second static or scalable static data flow signal and another arbitrary value for all other data elements into a second buffer, and
enabling an access of said second processor, task or thread only to data elements contained in said first buffer with a corresponding enable value in the second buffer.

6. Method according to claim 5, **characterized by** the following steps within said inter processing unit to write the first static or scalable static data flow signal into the first buffer:
- while data elements are available from the first static or scalable static data flow signal perform the following steps:
- wait for space in the first buffer by requesting a first buffer not full semaphore;
- lock the first and second buffers after reception of the buffer not full semaphore by requesting a buffer access semaphore;
- put data elements from the first static or scalable static data flow signal into the first buffer while the first buffer is not full and respective data elements are available;
- set a buffer not empty semaphore if data elements from the first static or scalable static data flow signal and data elements from the third static or scalable static data flow signal are in the respective buffers after the second buffer is full or no enable elements from the third static or scalable static data flow signal are available;
- release the first buffer not full semaphore if the first buffer is not full; and
- unlock the first and second buffers by releasing the buffer access semaphore.

7. Method according to claim 5 or 6, **characterized by** the following steps within said inter processing unit to write the third static or scalable static data flow signal into the second buffer:
- while enable elements are available from the third static or scalable static data flow signal perform the following steps:
- wait for space in the second buffer by requesting a second buffer not full semaphore;
- lock the first and second buffers after reception of the buffer not full semaphore by requesting a buffer access semaphore;
- put enable elements from the third static or scalable static data flow signal into the second buffer while the second buffer is not full and respective enable elements are available;
- set a buffer not empty semaphore if data elements from the first static or scalable static data flow signal and enable elements from the third static or scalable static data flow signal are in the respective buffers after the second buffer is full or no enable elements from the third static or scalable static data flow signal are available;
- release the second buffer not full semaphore if the second buffer is not full; and
- unlock the first and second buffers by releasing the buffer access semaphore.

8. Method according to claim 5, 6 or 7, **characterized by** the following steps within said inter processing unit to read the second static or scalable static data flow signal from the first buffer:
- while data elements are requested as second static or scalable static data flow signal perform the following steps:
- wait for elements in the first and second buffers by requesting a buffer not empty semaphore;
- lock the first and second buffers after reception of the buffer not empty semaphore by requesting a buffer access semaphore;
- while the first and the second buffers are not empty and data elements are requested as second static or scalable static data flow signal perform the following two steps:
- get one data element from the first buffer and one enable element from the second buffer and output said data element from the first buffer, if said corresponding enable element from the second buffer equals to the enable value; and
- get one data element from the first buffer and one enable element from the second buffer and discard said data element from the first buffer, if said corresponding enable element from the second buffer equals not to the enable value;
- flag that space is in the first buffer and in the second buffer by setting a first buffer not full semaphore and a second buffer not semaphore;
- release the buffer not empty semaphore if the second buffer is not empty; and
- unlock the first and second buffers by releasing the buffer access semaphore.

9. Method according to anyone of claims 1 to 3, **characterized in that**
a third static or scalable static data flow signal having said first data rate is assigned to said first processor, task or thread, said third static or scalable static data flow signal being an enable signal comprising enable elements and defining whenever a data element of said first fixed or scalable data signal should be output, and
said inter processing unit receives said second static or scalable static data flow signal from said second processor, task or thread and said third static or scalable static data flow signal from said first processor, task or thread and outputs said first static or scalable static data flow signal to said first processor, task or thread.

10. Method according to claim 9, **characterized by** the following steps within said inter processing unit
storing all data elements of said said second static or scalable static data flow signal into a first buffer,
storing all enable elements of said said third static or scalable static data flow signal that are respectively containing a predefined enable value for a respective data element of said first static or scalable static data flow signal coming from a data element of said second static or scalable static data flow signal and another arbitrary value for another data element into a second buffer,
outputting a dummy data element as data element of the first static or scalable static data flow signal when an enable element having another value than an enable value is received from said third static or scalable static data flow signal, and
propagating the following data element of the second static or scalable static data flow signal as data element of the first static or scalable static data flow signal when an enable element having an enable value is received from said third static or scalable static data flow signal.

11. Method according to claim 10, **characterized by** the following steps within said inter processing unit to write the second static or scalable static data flow signal into the first buffer:
- while data elements are available from the second static or scalable static data flow signal perform the following steps:
- wait for space in the first buffer by requesting a first buffer not full semaphore;
- lock the first and second buffers after reception of the first buffer not full semaphore by requesting a buffer access semaphore;
- put data elements from the second static or scalable static data flow signal into the first buffer while the first buffer is not full and such data elements are available;
- set a buffer not empty semaphore if data elements from the first static or scalable static data flow signal and data elements from the third static or scalable static data flow signal are in the respective buffers after the second buffer is full or no enable elements from the third static or scalable static data flow signal are available;
- release the first buffer not full semaphore, if the first buffer is not full; and
- unlock the first and second buffers by releasing the buffer access semaphore.

12. Method according to claim 10 or 11, **characterized by** the following steps within said inter processing unit to write the third static or scalable static data flow signal into the second buffer:
- while enable elements are available from the third static or scalable static data flow signal perform the following steps:
- wait for space in the second buffer by requesting a second buffer not full semaphore;
- lock the first and second buffers after reception of the second buffer not full semaphore by requesting a buffer access semaphore;
- put enable elements from the third static or scalable static data flow signal into the second buffer while the second buffer is not full and such enable elements are available;
- set a buffer not empty semaphore after the second buffer is full or no enable elements from the third static or scalable static data flow signal are available, if the second buffer is not empty and the first enable element of the third static or scalable static data flow signal does not contain an enable value or if the second buffer is not empty and the first buffer is not empty;
- release the second buffer not full semaphore if the second buffer is not full; and
- unlock the first and second buffers by releasing the buffer access semaphore.

13. Method according to claim 10, 11 or 12, **characterized by** the following steps within said inter processing unit to read the first static or scalable static data flow signal from the first buffer:
- while data elements are requested as first static or scalable static data flow signal perform the following steps:
- wait for elements in the first and second buffers by requesting a buffer not empty semaphore;
- lock the first and second buffers after reception of the buffer not empty semaphore by requesting a buffer access semaphore;
- while the second buffer is not empty and the first enable element of the second buffer is not equal to the enable value and data elements are requested as first static or scalable static data flow signal or while the second buffer is not empty and the first buffer is not empty and data elements are requested as first static or scalable static data flow signal perform the following two steps:
- get one enable element from the second buffer and output a stuffing data element, if said corresponding enable element from the second buffer equals to the enable value; and
- get one enable element from the second buffer and output one data element from the first buffer, if said corresponding enable element from the second buffer equals not to the enable value;
- flag that space is in the second buffer by setting a second buffer not full semaphore;
- set a first buffer not full semaphore, if the first buffer is not full;
- release the buffer not empty semaphore if the second buffer is empty, or if the first enable element of the second buffer equals to the enable value and the first buffer is empty; and
- unlock the first and second buffers by releasing the buffer access semaphore.

14. Method according to claim 4 or 9, **characterized by** the following steps within said inter processing unit to write the first static or scalable static data flow signal into a first buffer when no third static or scalable static data flow signal or a third static or scalable static data flow signal having enable elements with only enable values is present:
- while data elements are available from the first static or scalable static data flow signal perform the following steps:
- wait for space in the first buffer by requesting a buffer not full semaphore;
- lock the first buffer after reception of the buffer not full semaphore by requesting a buffer access semaphore;
- put data elements from the first static or scalable static data flow signal into the first buffer while the buffer is not full and such data elements are available;
- set a buffer not empty semaphore after the first buffer is full or no data elements from the first static or scalable static data flow signal are available;
- release the buffer not full semaphore if the first buffer is not full; and
- unlock the first buffer by releasing the buffer access semaphore.

15. Method according to claim 4, 9 or 14, **characterized by** the following steps within said inter processing unit to read the second static or scalable static data flow signal from a first buffer when no third static or scalable static data flow signal or a third static or scalable static data flow signal having enable elements with only enable values is present:
- while data elements are requested as second static or scalable static data flow signal perform the following steps:
- wait for elements in the first buffer by requesting a buffer not empty semaphore;
- lock the first buffer after reception of the buffer not empty semaphore by requesting a buffer access semaphore;
- get data elements from the first buffer while the buffer is not empty and such data elements are requested;
- flag that space is in the first buffer by setting a buffer not full semaphore after the first buffer is not empty or no data elements are requested from the first buffer;
- release the buffer not empty semaphore if the first buffer is not empty; and
- unlock the first buffer by releasing the buffer access semaphore.

16. Method according to anyone of claims 1 to 15, **characterized in that** said multiprocessor, multitask or multithread system is a COSSAP system.

17. Method according to anyone of claims 1 to 16, **characterized in that** it is used in a code generator for multi-DSP code.

18. Method according to claim 17, **characterized in that** said code generator is a COSSAP code generator.

19. Inter processing unit, **characterized by** one of the methodes defined in anyone of claims 3, 5, or 6 to 16.
